# EUROPEAN PATENT SPECIFICATION

(11) **EP 1 343 157 B1**
(45) Date of publication and mention of the grant of the patent: **23.05.2007**
(21) Application number: 03251322.8
(22) Date of filing: 05.03.2003
(51) Int. Cl.: G11B 7/24

(54) **Optical recording medium**
Optisches Aufzeichnungsmedium
Support d' enregistrement optique

(30) Priority: 07.03.2002 JP 2002062391; 12.03.2002 JP 2002066607
(43) Date of publication of application: 10.09.2003
(73) Proprietor: FUJIFILM Corporation, Minato-ku Tokyo (JP)
(72) Inventor: Usami, Yoshihisa, Odawara-shi, Kanagawa (JP); Komori, Noboru, Odawara-shi, Kanagawa (JP)
(74) Representative: Stevens, Jason Paul

(56) References cited:
- EP-A1- 1 172 812
- EP-A2- 0 548 968
- EP-A2- 1 187 118
- WO-A1-95/12881
- GB-A- 2 347 262
- US-A- 4 751 124
- US-A- 5 827 593
- US-A- 6 011 771

## Description

### BACKGROUND OF THE INVENTION

### Field of the Invention

The present invention relates to an optical recording medium capable of recording and reproducing information by using a laser beam.

### Description of the Related Art

Conventionally, an optical recording medium (optical disk), which is capable of recording information only once by using a laser beam, has been known. Such optical disks are also referred to as recordable CDs (CD-Rs), and are typically structured so that an organic dye recording layer, a reflection layer made of metals such as gold, and a resin protective layer are stacked in this order on a transparent disc-shaped substrate. Information is then recorded by irradiating a near-infrared laser beam (normally, a laser beam having a wavelength in the vicinity of 780 nm) onto the CD-R. In other words, the irradiated portion of the dye recording layer absorbs the light, and the temperature of the irradiated area rises to cause a physical or chemical change (e.g., the formation of pits) in the optical characteristics of the portion, and information is thus recorded. Moreover, information reading (reproduction) is also carried out by irradiating on the CD-R a laser beam having the same wavelength as the laser beam used to record the information. Namely, reproduction is carried out by detecting the differences in the reflectivity in the dye recording layer between a portion having changed optical characteristics (recorded portion) and an unchanged portion (unrecorded portion).

In recent years, along with the development of personal computers and the like, there has been an increased demand for optical recording media having higher recording density. In order to enhance the recording density, it is effective to decrease the diameter of the irradiated laser beam, and it has been theoretically known that a laser beam having a shorter wavelength is more advantageous for obtaining high density since such a laser's optical diameter can be decreased. Therefore, optical recording media capable of recording and reproducing by using a laser beam having a wavelength shorter than the generally used 780 nm have been developed. An example of one of these optical recording media is the recordable digital-versatile-disk (DVD-R), which has been proposed (for example, see separate volume "DVD" of *Nikkei New Media,* published in 1995).

These optical recording media are manufactured by preparing two disks each of which has a transparent disc-shaped substrate having a diameter of 120 mm or a diameter of 80 mm and guide grooves (pre-grooves) for tracking the irradiated laser beam, having a narrow groove width of not more than half that of the CD-R (0.74 to 0.8 µm), and a recording layer and, if necessary, a reflective layer and a protective layer in this order or a combination of such a disk and a disc-shaped protective substrate having virtually the same dimension as the disk, and by bonding them to each other with their respective recording layers or its recording layer facing inward. Here, the information recording and reproducing processes are carried out on DVD-R by irradiating a visible laser beam (normally, a laser beam having a wavelength ranging from 630 to 680 nm) thereto, so that recording at a higher density than a CD-R is possible. When the inner circumference diameter of the data recording area is 48 mm with an outer circumference diameter of 116 mm, a minimum track pitch of 0.74 µm and a linear velocity of 3.5 m/s, the maximum recording capacity of the DVD-R becomes 4.70 GB.

Furthermore, phase-change type optical recording media (CD-RW, DVD-RW), which are optical recording media that can record, reproduce, and erase information with a laser beam, and utilize a transition between crystal and amorphous phases or between two crystal phases, have been known. The phase-change type optical recording medium mainly comprises a phase-change recording layer primarily composed of a chalcogen such as Te and Se, light-transmitting dielectric layers that sandwich this phase-change recording layer, a reflective layer placed on the side opposite to the incoming side of the laser beam, and a protective layer.

In the optical recording medium of this type, for example, a reflective layer is formed in a doughnut shape from the vicinity of the outer circumference of the optical disk (optical recording medium) to the vicinity of the stack ring, normally by using a sputtering method. However, in this arrangement, irregularities in the thickness of the reflective layer in the radial direction tend to occur depending on the sputtering conditions, or the substrate tends to be seriously deformed after sputtering due to residual stress in the sputtered film, resulting in reduced reflectivity. Moreover, there are cases when the dye in the recording layer is damaged due to the influences of plasma during the sputtering process, resulting in reduction in the degree of modulation and irregularities in the radial direction in the recording and reproducing characteristics.

Moreover, in the case of optical recording media having a dye recording layer, order to prevent the color of an adhesive from becoming visible through the transparent portion without film formation located in the vicinity of the inner circumference of the substrate, the adhesive to be used when bonding the substrates is applied only to such a degree as to cover the inner edge of the recording layer, the reflective layer, and the like. In other words, no adhesive is applied in a range from approximately 20 mm from the center of the bole of the substrate.

Therefore, the area without the adhesive applied thereto tends to have a void, causing a warp in the resulting optical recording medium.

There are a large number of documents disclosing optical recording media of this type. For example, US 5827593, which is used for the two-part form delimitation, discloses a disc-shaped optical recording medium comprising at least one sputter layer formed by a sputtering method, and also comprising a stack ring.

Other media are disclosed in EP 1187118, US 4751124, and US 6011771.

### SUMMARY OF THE INVENTION

The present invention has been devised to solve the above-mentioned conventional problems, and its object is to provide an optical recording medium which has less distribution of the reflective and degree of modulation in the radial direction, and has stable recording and reproducing characteristics.

Moreover, another object of the invention is to provide an optical recording medium which can prevent the occurrence of a warp due to lack of adhesive application.

A first aspect of the invention provides a disc-shaped optical recording medium characterized in that a radially inner circumferential edge of the sputter layer is located radially inside of the stack ring.

The sputter layer is not particularly limited, and any layer may be used as long as it is formed by a sputtering method; for example, in the case of the recordable optical recording medium, a reflective layer is included therein, and in the case of the rewritable optical recording medium, all the layers except the substrate are included therein.

Moreover, with respect to the diameter of the radially inner circumferential edge of the sputter layer, any diameter may be adopted as long as it is smaller than the diameter of the stack ring; therefore, it is preferably set to 15 to 44 mm, and more preferably 16 to 36 mm.

In a second aspect of the invention, it is preferred for the optical recording medium to comprise a pair of disc-shaped substrates, each having a hole in the center portion thereof, that are bonded to each other through a bonding layer made from an adhesive with a print layer being formed on a single side, wherein radially inner edges of the bonding layer and the print layer are located within a range from 18 mm from the center of the hole.

The radially inner edge of the print layer is preferably located on the side closer to the center of the hole from the radially inner edge of the above-mentioned bonding layer. With this arrangement, since the bonding layer is covered with the print layer so that the adhesive becomes invisible from outside; thus, it is possible to provide an optical recording medium that is superior from the viewpoint of the appearance.

### BRIEF DESCRIPTION OF THE DRAWINGS

Fig. 1 is a schematic cross-sectional view showing an optical recording medium to which the present invention is applied.
Fig. 2 is a partial perspective view showing the optical recording medium to which the invention is applied.
Fig. 3 is a cross-sectional view of an essential portion that is one example of a center portion of the optical recording medium of the invention.

### DETAILED DSCRIPTION OF THE PREFERRED EMBODIMENTS

The embodiments of an optical recording medium of the present invention will be explained hereinafter.

A disc-shaped optical recording medium according to the first aspect of the invention has at least one sputter layer formed by a sputtering method and the inner circumference of the sputter layer is located on the inner side from a stack ring.

Moreover, an optical recording medium according to the second aspect of the invention has a pair of disc-shaped substrates and each of them has a hole in the center portion thereof, and the pair of substrates are bonded to each other through a bonding layer made from an adhesive. Here, the optical recording medium of the invention has a print layer on one of the pair of substrates.

With respect to a specific structure of the optical recording medium relating to the second aspect of the invention, for example, the following are listed: a structure in which two laminated members, each having a recording layer and a reflective layer and, if desired, a protective layer or the like formed on a substrate, are bonded to each other by an adhesive in a manner so as to make the respective recording layers located inside thereof, with a print layer being formed on one of the substrates, and which has two recording layers; and a structure in which a disc-shaped protective substrate (dummy substrate) having virtually the same size as the above-mentioned substrate is bonded onto a laminated member formed by stacking a recording layer and a reflection layer on a substrate, by an adhesive in a manner so as to make the recording layer located inside thereof, with a print layer being formed on one of the substrates, and which has only one recording layer.

Here, with respect to the material of the protective substrate, the same material as the substrate may be adopted.

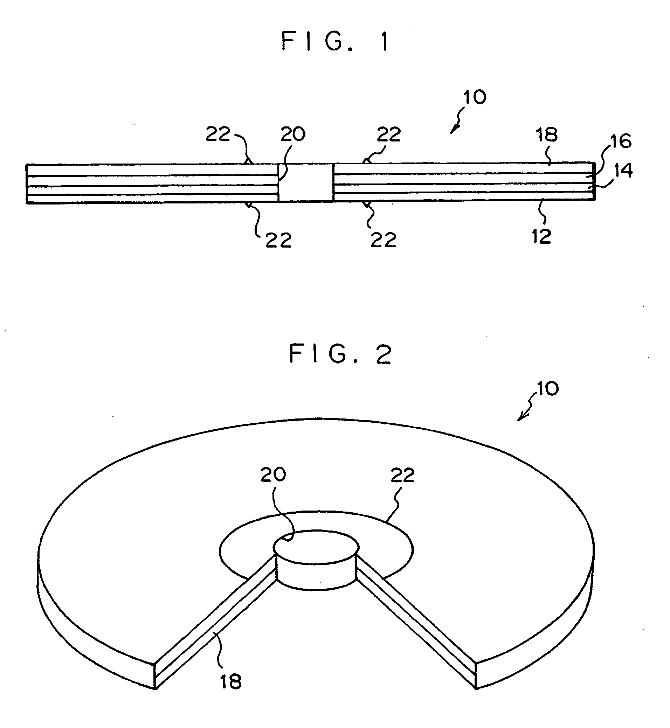

Fig. 1 schematically shows a cross-section of a recordable optical recording medium 10 having a dye recording layer according to the first aspect of the invention. The optical recording medium 10 is a disc-shaped optical medium which is formed by stacking a dye recording layer 14, a reflective layer (sputter layer) 16 and a protective layer 18 on a substrate 12, with a center hole 20 being formed in the center thereof. The diameter of the center hole 20 is 15 mm, and a stack ring 22 is formed at a position separated from the edge of the center hole 20 with a predetermined distance along a concentric circle of the center hole 20. The stack ring 22 prevents optical recording media from adhering to each other when the optical recording media are stacked. For example, when disks are stacked immediately after the formation of the reflective layer, and the optical recording media adhere to each other, a reflective layer or an information reading face is damaged. Alternatively, when these are stacked immediately after a label printing process, a printed label face is stained to cause a defective product or information reading face is stained due to ink from printed label, or information reading face might be damaged in the case of hardened ink. The stack ring 22 prevents these problems.

In the optical recording medium 10 of the present embodiment, the reflective layer 18 is formed by a sputtering method, and as shown in Figs. 1 and 2, the inner circumference of the reflective layer 18 is located on the inner side from the stack ring 22. In the conventional structure, the inner circumference of the reflective layer is located in the vicinity of the stack ring. However, placing the inner circumference of the reflective layer on the inner side from the stack ring can reduce the diameter of the mask during sputtering in the manufacturing processes. When the diameter of the mask is reduced, it is possible to form a film more evenly in the radial direction, and consequently to reduce deformation in the substrate. Moreover, it is also possible to reduce influences of plasma that are given to the dye in the recording layer during the sputtering process. Therefore, in comparison with the conventional optical recording medium having the reflective layer located in the vicinity of the stack ring, the optical recording medium of the invention makes it possible to reduce irregular distribution of the recording and reproducing characteristics in the radial direction, and consequently to provide stable recording and reproducing characteristics on the entire circumferential area.

With respect to the diameter of the above-mentioned mask, it is preferably set to be smaller than the diameter of the stack ring, and also set to a value of not less than 16 mm.

Although the optical recording medium 10 shown in Fig. 1 has a structure in which the sputter layer is a reflective layer, the sputter layer is not limited to the reflective layer in the invention, and any layer is included as long as it is formed by using a sputtering method with the inner circumference thereof being located on the inner side from the stack ring. The diameter of the inner circumference of the sputter layer is preferably set to 15 to 44 mm, and more preferably 16 to 36 mm.

Examples of sputter layer include a reflective layer in the case of a recordable optical recording medium such as a DVD-R, and all the layers except the substrate in the case of a rewritable optical recording medium such as a DVD-RW.

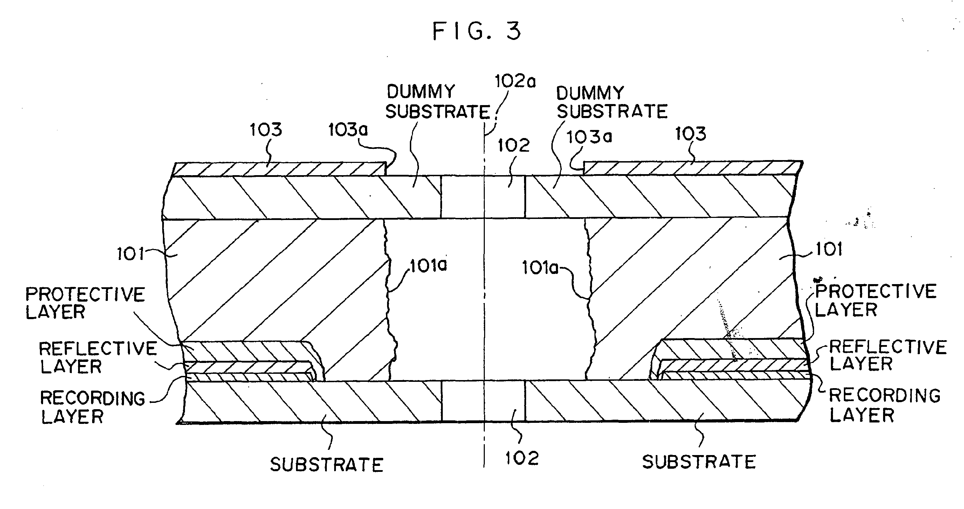

Fig. 3 shows an optical recording medium according to the second aspect. As shown in this Figure, the inner edge 101a of a bonding layer 101 made from an adhesive is located in a range from 18 mm from the center 102a of a hole 102 formed in the center of the substrate, and the inner edge 103a of a print layer 103 is also located in a range from 18 mm from the center 102a of the hole 102.

Here, suppose that almost all the inner edges 101a and 103a, more preferably, all of them, are located within a range from 18 mm from the above-mentioned center 102a.

By setting these within the above-mentioned range, the void portion between the substrates becomes smaller, making it possible to provide an optical recording medium that has less warp.

In order to effectively reduce the occurrence of a warp, the respective inner edges of the bonding layer and the print layer are preferably placed within a range from 15 mm from the center 102a of the hole 102, and more preferably within a range from 13 mm therefrom.

Moreover, the absolute value (|L¹ - L²|) of a difference between the length L¹ from the center 102a of the hole 102 to the inner edge of the bonding layer and the length L² from the center of the hole to the inner edge of the print layer is preferably set to not more than 6 mm, more preferably not more than 4 mm, and most preferably not more than 2 mm.

The absolute value of the above-mentioned difference exceeding 6 mm tends to cause a greater warp.

With respect to the above-mentioned adhesive, a UV-curable resin, which is used for forming a protective layer as described later, may be used, or a synthetic adhesive may be used. Examples of the synthetic adhesive include a slow-acting adhesive such as a cationic curing type epoxy resin and a spin curing type adhesive such as an ultraviolet-ray curing type acrylate resin.

Moreover, a slow-acting UV-curable adhesive may be used. The slow-acting UV-curable adhesive is applied to substrates and the like and then irradiated with ultraviolet rays, and the substrates are bonded to each other. Therefore, it is possible to carry out the bonding process with high precision. With respect to the slow-acting UV-curable adhesive, a cationic curing type epoxy resin or the like may be used, and more specifically, SK7000 made by Sony Chemicals Corporation may be used.

Additionally, the above-mentioned slow-acting UV-curable adhesive tends to give poor impression to people due to its inherent color in comparison with a normal adhesive. However, since the inner edge of the print layer is formed on the center side from the bonding layer as will be described later, it is possible to hide the adhesive, and also to avoid giving poor external appearance.

The adhesive is applied to at least one of joining faces by using a roll coating method, a spin coating method, a screen printing method or the like.

In order to prevent warping, the thickness of the bonding layer is preferably set to a range of 5 to 55 µm, more preferably 10 to 47 µm, and most preferably 13 to 40 µm.

In any one of the optical recording media of the above-mentioned structure, the entire thickness is preferably set to 1.2 ± 0.2 mm.

The print layer, formed on one face, is generally utilized as an index or the like of recorded information. The print layer is normally formed by a screen printing method, and printed in a superposed manner layer by layer.

Moreover, the print layer is preferably formed by using a material that makes the succeeding printing process easier; and more specifically, an ultraviolet-ray curing type acrylate or urethane ink may be used.

In the same manner as a protective layer which will be described later, the print layer may be formed by dissolving the above-mentioned material in an appropriate solvent to prepare a coating solution, applying this coating solution is applied, and drying or hardening the coating layer or by laminating film-shaped print layers.

The thickness of the print layer is preferably set to 3 to 50 µm, and more preferably 5 to 30 µm.

The print layer is preferably formed over the entire print area so as to hide the base surface.

The substrate and the respective layers of the optical recording medium of the invention will be now explained in detail but the invention is not limited to these embodiments.

### <Substrate>

With respect to the substrate, a desired material may be properly selected from various kinds of materials that are conventionally used as substrate materials for optical recording media.

More specifically, examples thereof include: glass; acrylic resins such as polycarbonate and polymethyl methacrylate; vinyl chloride resins such as polyvinyl chloride and vinyl chloride copolymer; epoxy resins; amorphous polyolefin; polyester; metals such as aluminum. These may be used in combination, if necessary. Additionally, these materials may be used as films or as substrates having rigidity.

Among the above-mentioned materials, polycarbonate and amorphous polyolefin are preferably used from the viewpoint of wet endurance, dimensional stability, low price and the like, and polycarbonate is particularly preferable. In the first aspect, the thickness of the substrate is preferably set to 0.5 to 1.4 mm. Moreover, in the second aspect, substrates having a diameter of 120 ± 3 mm and a thickness of 0.6 ± 0.1 mm or substrates having a diameter of 80 ± 3 mm and a thickness of 0.6 ± 0.1 mm are generally used.

Guide grooves for use in tracking or pits or grooves (pre-grooves) representing information such as address signals are formed on the substrate.

In the first aspect, although not particularly limited, the track pitch of the pre-grooves is preferably set to 400 to 900 nm, more preferably 450 to 850, and most preferably 500 to 800 nm. Moreover, the depth of the pre-grooves (groove depth) is preferably set to 80 to 180 nm, more preferably 100 to 170 nm, and most preferably 110 to 160 nm. Furthermore, the half-value width of the pre-grooves is preferably set to 200 to 400 nm, more preferably 230 to 380 nm, and most preferably 250 to 350 nm.

In the second aspect, the groove width of the pre-grooves is preferably set to not more than 450 nm, more preferably not more than 400 nm, and most preferably not more than 350 nm. The groove width exceeding 450 nm tends to fail to prevent unevenly spread pits. Moreover, the lower limit of the groove width is preferably set to not less than 50 nm, more preferably not less than 100 nm, and most preferably not less than 150 nm. The groove depth is preferably set to not more than 300 nm, more preferably not more than 250 nm, and most preferably not more than 200 nm. The groove depth deeper than 300 nm tends to cause degradation in the reflectivity. Further, the lower limit of the groove depth is preferably set to not less than 50 nm, more preferably not less than 70 nm, and most preferably not less than 80 nm. The groove depth shallower than 50 nm tends to fail to prevent unevenly spread pits. The track pitch is preferably set to not more than 1200 nm, more preferably not more than 1000 nm, and most preferably not more than 900 nm. Moreover, the lower limit of the track pitch is preferably set to not less than 100 nm, more preferably not less than 200 nm, and most preferably not less than 300 nm.

Moreover, in the second aspect, the pre-grooves may be formed by placing a pre-groove layer. With respect to the material of the pre-groove layer, a mixture of at least one kind of monomer (or oligomer) selected from monoester, diester, triester and tetraester of acrylic acid, and a photopolymerization initiator may be used. The formation of the pre-groove layer may be carried out in the following manner: for example, a mixed solution made from the above-mentioned acrylate and polymerization initiator is applied onto a mother mold (stamper) that has been formed with precision, and after a substrate has been placed on the coated solution layer, ultraviolet rays are applied thereto through the substrate or the mother mold so that the coated layer is set to bond the substrate and the coated layer to each other. Next, the substrate is separated from the mother mold to provide the pre-grooves. The thickness of the pre-groove layer is generally set in a range from 0.05 to 100 µm, and more preferably 0.1 to 50 µm.

In the first aspect, the above-mentioned stack ring is formed on the substrate. The diameter of the stack ring is set to, for example, 33 to 44 mm.

An undercoat layer may be formed on the substrate surface on the side on which a recording layer, which will be described later, is formed, for the purposes of improving the flatness, enhancing the adhesive strength, preventing deterioration of the recording layer. With respect to the material of the undercoat layer, for example, the following materials may be used: polymer materials such as polymethyl methacrylate, copolymer of acrylic acid-methacrylic acid, copolymer of styrene-maleic anhydride, polyvinyl alcohol, N-methylol acryl amide, copolymer of styrene-vinyltoluene, chlorosulfonated polyethylene, nitrocellulose, polyvinyl chloride, chlorinated polyolefin, polyester, polyimide, copolymer of vinyl acetate-vinyl chloride, copolymer of ethylene-vinyl acetate, polyethylene, polypropylene and polycarbonate; and surface modifing agent such as silane coupling agents.

After the above-mentioned material has been dissolved or dispersed in an appropriate solvent to prepare a coating solution, the undercoat layer is formed by applying this coating solution onto a substrate surface by using a spin coating method, a dip coating method, an extrusion coating method or the like. The layer thickness of the undercoat layer is generally set in a range from 0.005 to 20 µm, and more preferably a range of 0.01 to 10 µm.

### <Recording Layer>

A recording layer is formed on a surface of a disc-shaped substrate (or an undercoat layer) in which the pre-grooves are formed.

A dye recording layer is used in the case of a recordable optical recording medium, and a phase-change recording layer is used in the case of a rewritable optical recording medium. The respective recording layers will be explained.

### -Dye Recording Layer-

The dye to be used in the dye recording layer is not particularly limited, and examples of the applicable dye include: cyanine dye, phthalocyanine dye, azo dye, metal complex dye, dipyrromethene metal complex dye, imidazoquinoxaline dye, pyrylium dye, thiopyrylium dye, azulenium dye, squarylium dye, metal complex salt dye such as Ni and Cr, naphthoquinone dye, anthraquinone dye, indophenol dye, indoaniline dye, triphenylmethane dye, merocyanine dye, oxanol dye, aminium dye, diimmonium dye and nitroso compounds. Among these dyes, cyanine dye, phthalocyanine dye, oxanol dye, azo dye, metal complex dye and dipyrromethene metal complex dye are preferably used, and phthalocyanine dye is more preferably used.

Moreover, those disclosed in Japanese Patent Applications Laid-Open (JP-A) Nos. 4-74690, 8-127174, 11-53758, 11-334204, 11-334205, 11-334206, 11-334207, 2000-43423, 2000-108513, and 2000-158818 may be preferably used.

With respect to the solvent for the coating solution used for forming the dye recording layer, esters such as butyl acetate, cerosolve acetate and 2-methoxyethyl acetate; ketones such as methyl ethyl ketone, cyclohexanone and methyl isobutyl ketone; chlorinated hydrocarbons such as dichloromethane, 1,2-dichloromethane and chloroform; amides such as dimethylformamide; hydrocarbons such as cyclohexane; ethers such as tetrahydrofuran, ethyl ether and dioxane; alcohols such as ethanol, n-propanol, isopropanol, n-butanol and diacetone alcohol; fluorinated solvents such as 2,2,3,3-tetrafluoropronanol; and glycol ethers such as ethylene glycol monomethyl ether, ethylene glycol monoethyl ether and propylene glycol monomethyl ether. Only one of these materials may be used or two or more kinds of these may be used in combination, by taking the dissolving property of the dye to be used into consideration. Preferably, a fluorinated solvent such as 2,2,3,3-tetrafluoropropanol is used. Here, an anti-fading agent and a binder may be desirably added to the coating solution, and any additive such as an antioxidant, a UV absorbent, a plasticizer and a lubricant may be added according to the objectives.

The concentration of the dye in the coating solution prepared in this manner is generally set in a range from 0.01 to 10 mass%, and more preferably in a range from 0.1 to 5 mass%.

Any anti-fading agent may be added to the dye recording layer in order to improve the light resistance of the dye recording layer.

With respect to the anti-fading agent, a singlet oxygen quencher is generally used. With respect to the singlet oxygen quencher, those already disclosed in publications such as known patent specifications may be used.

Specific examples thereof include those disclosed in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, Japanese Patent Application Publication (JP-B) Nos. 1-38680 and 6-26028, German Patent No. 350,399, and those disclosed on page 1141, in October Issue of Journal of Japan Chemical Society, 1992.

With respect to anti-fading agents other than the singlet oxygen quencher, typical examples thereof include: nitroso compounds, metal complexes, diimmonium salt, aminium salt, diammonium salt and ammonium salt. These examples are described, for example, in JP-A Nos. 2-300288, 3-224793 and 4-146189. When the anti-fading agent is applied, the amount thereof is normally set in a range from 0.1 to 50 mass% with respect to the amount of the dye, preferably, in a range from 0.5 to 45 mass%, more preferably in a range from 3 to 40 mass%, and most preferably in a range from 5 to 25 mass%.

With respect to the binder, examples thereof include: natural organic polymer substances such as gelatin, cellulose derivatives, dextran, rosin and rubber; and synthetic organic polymers including hydrocarbon resins such as polyethylene, polypropylene, polystyrene and polyisobutylene, vinyl resins such as polyvinyl chloride, polyvinylidene chloride, and copolymer of vinyl chloride-vinyl acetate, acrylic resins such as polymethyl acrylate and polymethyl methacrylate, and thermosetting resins such as polyurethane, polyvinyl alcohol, chlorinated polyethylene, epoxy resin, butyral resin, rubber derivatives and initial condensates of phenol-formaldehyde resin. When a binder is used in the dye recording layer, the amount of the binder is generally set in a range from 0.01 to 50 times (mass ratio), and more preferably in a range from 0.1 to 5 times (mass ratio) as many as the amount of the recording material. More specifically, the amount of the binder is generally set to 0.2 to 20 parts by mass with respect to 100 parts by mass of the dye, preferably 0.5 to 10 parts by mass, and more preferably 1 to 5 parts by mass.

With respect to the above-mentioned solvent, only one of these materials may be used or two or more kinds of these may be used in combination, by taking the dissolving property of the recording material to be used into consideration. Moreover, any additive such as an antioxidant, a UV absorbent, a plasticizer and a lubricant may be added thereto according to the objectives.

The formation of the recording layer is carried out, for example, in the following manner: a dye, and as needed, an anti-fading agent, a binder and the like are dissolved in a solvent to prepare a coating solution, and this coating solution is then applied onto the surface of a substrate on which pre-grooves have been formed to provide a coating film, and this is then dried.

With respect to the coating method, examples thereof include a spray method, a spin coating method, a dipping method, a roll coating method, a blade coating method, a doctor roll method, a screen printing method and the like. The dye recording layer may be a single layer or a laminated layer. In the first aspect, the thickness of the dye recording layer is generally set in a range from 20 to 500 nm, preferably in a range from 30 to 300 nm, and more preferably in a range from 50 to 100 nm. In the second aspect, in the case where the thickness of the recording layer is too thick in its groove portions, the pits tend to be expanded; therefore, the layer thickness is preferably set in a range from 40 to 230 nm, more preferably in a range from 60 to 200 nm, and most preferably 70 to 180 nm.

Moreover, with respect to the coating temperature, a temperature range of 23 to 50° C is used without causing any problems; however, the range is preferably set to 24 to 40° C, and more preferably 25 to 37° C.

After formation of the recording layer, this is preferably subjected to an annealing process at 5 to 90° C for 5 to 300 minutes so as to eliminate the residual solvent and improve the shelf life.

### -Phase-Change Recording Layer-

The phase-change recording layer is a layer made from a material in which phase changes between a crystal phase and an amorphous phase can be repeated upon irradiation with a laser beam. For example, the phase change between the crystal phase and the amorphous phase is repeated in the following manner. At the time of recording information, concentrated laser beam pulses are applied for a short period of time so that the phase-change recording layer is partially melted. This melted portion is quickly cooled through thermal diffusion, and solidified so that a recorded mark in an amorphous state is formed. At the time of erasing information, laser beam is directed to the recorded mark portion so that this portion is heated to a temperature in a range from not more than the melting point of the recording layer to not less than the crystallization temperature, and then cooled down so that the recorded mark in the amorphous state is crystallized to return to its initial unrecorded state.

Specific examples of the material for forming the phase-change recording layer include: Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te alloy, Ag-In-Sb-Te alloy, Ag-V-In-Sb-Te alloy, Ag-Ge-In-Sb-Te alloy, and the like. Among these, Ge-Sb-Te alloy and Ag-In-Sb-Te alloy are preferably used since these materials make it possible to provide a large number of rewriting operations.

The thickness of the phase-change recording layer is preferably set in a range from 10 to 50 nm, and more preferably in a range from 15 to 30 nm.

The above-mentioned phase-change recording layer may be formed by a sputtering method, a vapor-phase thin-film deposition method such as a vacuum deposition method and the like.

### <Reflective Layer>

A reflective layer may be formed on the recording layer in order to improve the reflectivity at the time of reproducing information. With respect to a light reflective substance used for the reflective layer, substances which have high reflectivity with respect to laser beam, and contain metal or semi-metal, such as Ag, Au, Al, Zn, Rh, Sb, Mg and P, as a main component, are preferably used. Among these, Ag, Au, Al, Zn, Rh and Sb are more preferably used, and Ag, Au and Al are most preferably used from the viewpoint of costs and easiness in handling. These materials may be used alone, or two or more kinds of these may be used in combination as an alloy.

In this case, "main component" refers to the fact that the content of the component in the reflective layer material is not less than 50%, and the content of the main component is preferably set to not less than 70%, and more preferably not less than 85%.

Moreover, in order to prevent corrosion and the like, in addition to the above-mentioned materials, metals and semi-metals, such as B, C, N, O, Si, Sc, Ti, V, Cr, Mn, Fe, Co, Ni, Cu, Ga, Ge, Se, Sr, Y, Zr, Nb, Mo, Tc, Ru, Pd, Cd, In, Sn, Te, lanthanoid, Hf, Ta, W, Ir, Ti, Pb, Bi, Th, Re, Po and Pt, or stainless steel may be contained therein.

Among these, B, C, N, O, Si, Ti, V, Cr, Co, Ni, Cu, Ge, Sr, Y, Zr, Nb, Mo, lanthanoid, Hf, W, Bi, Th, Pt, and stainless steel are preferably used, and C, N, O, Si, Cu, Mo, W and Bi are more preferably used.

In order to improve the shelf life or in order to alter the external appearance, with respect to the reflective layer, the above-mentioned materials may be stacked as a single layer, or two or more kinds of these may be stacked as multiple layers.

The reflective layer may be formed on the recording layer by stacking the above-mentioned light reflective substances by using a vapor-phase thin-film deposition method such as a sputtering method, a vacuum vapor deposition method and an ion plating method.

In the first aspect, the thickness of the reflective layer is generally set in a range from 10 to 800 nm, preferably in a range from 20 to 500 nm, and more preferably in a range from 50 to 300 nm.

Moreover, in the second aspect, the thickness of the reflective layer is preferably set in a range from 10 to 350 nm, more preferably in a range from 30 to 300 nm, and most preferably 40 to 250 nm. The thickness of the reflective layer exceeding 350 nm causes insufficient light absorbing effects and degradation in the film quality. The thickness of less than 10 nm makes the reflectivity too low, and tends to cause the materials contained in the recording layer to mutually react with the material used for the protective layer when the protective layer is stacked on the reflective layer, chemically change and deteriorate.

### <Protective layer>

In order to physically and chemically protect the recording layer and the like, and also to prevent moisture from entering the inside of the optical recording medium, a protective layer may be formed on the reflective layer. Alternatively, this protective layer may also be formed on the side of the substrate having no recording layer in order to improve the scratch resistance and moisture resistance. The material used for the protective layer is not particularly limited as long as it is a transparent material, for example, inorganic substances such as SiO, SiO₂, MgF₂, SnO₂ and Si₃N₄; and organic substances such as thermoplastic resins like polycarbonate, thermosetting resins and UV-curable resins, may be used, and those having a moisture absorbing rate of not more than 5% in the case of 50% RH at 23° C are more preferably used.

Here, the term "transparent" refers to a transparent property that is sufficient to transmit light used as recording light and reproducing light (transmittance: not less than 90%).

The protective layer is formed by laminating a film obtained through extruding processes of plastic on the reflection layer and/or the substrate with a bonding layer interpolated in between. Alternatively, this layer may be formed by using a method such as a vacuum vapor deposition method, a sputtering method and a coating method. Moreover, in the case of the thermoplastic resin and thermosetting resin, after each of these has been dissolved in an appropriate solvent to prepare a coating solution, the coating solution may be applied and dried to form the protective layer.

In the case where the above-mentioned UV-curable resin is used as the protective layer, after a coating solution has been prepared by the resin as it is or by dissolving the resin in an appropriate solvent, the coating solution is applied, and irradiated with UV rays to be set so that the protective layer is formed.

Moreover, any additive such as an antistatic agent, an antioxidant and a UV absorbent may be added to the coating solution according to the objectives.

The hardness of the protective layer is preferably set to not less than F in terms of pencil scratching hardness, in order to prevent uneven expansion of pits in the protective layer direction, and more preferably set to not less than H.

In the first aspect, the thickness of the protective layer is set in a range from 1 to 30 µm, more preferably 3 to 20 µm, and most preferably 3 to 10 µm.

Moreover, in the second aspect, the thickness of the protective layer is preferably set in a range from 2. 5 to 23 µm, more preferably 3. 5 to 20 µm, and most preferably 4. 0 to 15 µm.

Here, in order to adjust the optical characteristics and to improve the shelf life and the adhesive property, an intermediate layer may be formed between the respective layers. With respect to the material used for the intermediate layer, for example, inorganic substances such as SiO, SiO₂, MgF₂, SnO₂ and Si₃N₄, may be used. Moreover, the intermediate layer may be formed by using a vacuum film-forming method, such as a vapor deposition method and a sputtering method, and a spin coating method.

Moreover, in the optical recording medium of the invention, a light-transmitting layer may be formed between the reflective layer and the recording layer in order to improve the adhesive property to the recording layer, depending on the characteristics of the recording layer.

With respect to the light-transmitting layer, any material may be used as long as it has a transmittance of not less than 90% in the laser wavelength.

The light-transmitting layer may be formed by using any conventionally known method, and the thickness of the light transmitting layer is preferably set in a range from 2 to 50 nm.

The information recording operation on the optical recording medium of the invention is carried out, for example, in the following manner.

First, while the optical recording medium is being rotated at a predetermined constant linear velocity or at a predetermined constant angular velocity, a recording laser beam, such as semiconductor laser beam, is converged thereon from the substrate side through an optical system so as to irradiate the medium. Upon irradiation with the laser beam, the irradiated portion of the recording layer, which has absorbed the light, is heated locally to cause a physical or chemical change and the subsequent change in the optical characteristics of the portion so that information is recorded.

With respect to the recording laser beam, laser beam in a visible range, such as semiconductor laser beam having an oscillation wavelength, normally, in a range from 600 nm to 700 nm (preferably 620 to 680 nm, and more preferably 630 to 660 nm), is used. Here, the recording light is preferably converged through an optical system with the NA being set to 0.55 to 0.7.

With respect to a reproducing process of information recorded as described above, it is carried out by applying a laser beam having the same wavelength as the recording laser beam thereto from the substrate side, with the optical recording medium being rotated as a predetermined constant linear velocity, to detect the reflected light.

### EXAMPLES

Examples of the present invention will be explained in detail hereinafter. However, the invention is not limited by these examples.

### Example 1

First, a resin substrate with a stack ring having a diameter of 36 mm, made of polycarbonate resin (made by Teijin Limited; trade name: PANLIGHT AD5503), was manufactured by injection-molding the resin. Next, 1.0 g of a dye A indicated by the following structural formula was mixed with 0.5 g of a dye B indicated by the following structural formula, and the dyes were dissolved in 100 cm³ of 1,1,2,2-tetrafluoro-1-propanol in 2 hours by using an ultrasonic vibrator (1800 W) so that a recording layer coating solution was prepared. This recording layer coating solution was applied onto a surface having pre-grooves of the above-mentioned polycarbonate substrate by using a spin coating method with the number of revolutions being varied in a range from 300 to 4,000 rpm, and the coating layer was dried to form a dye recording layer (thickness (inside the pre-groove): approximately 150 nm). The conditions of the formation of the dye recording layer were: temperature of ambient atmosphere: 23°C, humidity: 50% RH, temperature of the coating solution: 23°C, temperature of the substrate: 23°C, and evacuation rate: 0.1 m/sec.

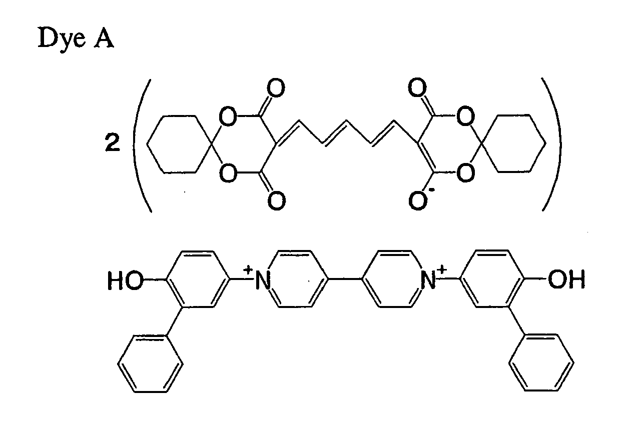

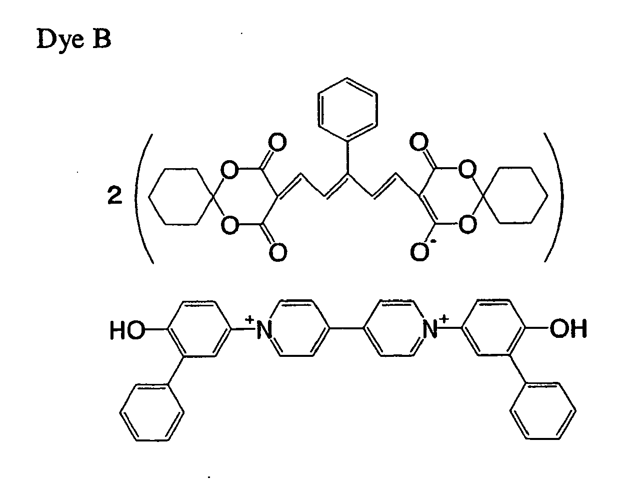

Next, the substrate with the dye recording layer formed thereon was stored under a dry environment at 60° C for 2 hours to remove the residual solvent from the dye recording layer. Then, silver was deposited on the dye recording layer by a sputtering process so that a reflective layer having a layer thickness of 150 nm and an inner diameter of 22 mm was formed. Moreover, a UV-curable resin (made by Dainippon Ink & Chemicals, Inc., trade name: SD318) was applied onto the reflective layer by spin coating with the number of revolutions being varied from 50 to 5,000 rpm. After the coating process, the coated resin was irradiated from above with ultraviolet rays from a high pressure mercury lamp to cure the resin, thereby forming a protective layer having a thickness of 8 µm.

Thus, recordable optical recording medium A, which was constituted by the substrate, and the dye recording layer, the reflective layer and the protective layer formed through the above-mentioned processes, was obtained.

Next, silver was sputtered on a substrate prepared in the same manner as the substrate described above to form a layer having a layer thickness of 150 nm and a UV-curable resin was applied to the silver layer to prepare a protective layer; thus, a dummy substrate B was prepared, and the substrate of the optical recording medium A and the dummy substrate B were joined to each other to prepare an optical recording medium of example 1.

### Comparative Example 1

An optical recording medium was manufactured in the same manner as example 1 except that in the arrangement of example 1, the inner circumference of the reflective layer was made coincident with the position of the stack ring.

### Evaluation

Measurements were carried out on the optical recording media of example and comparative example obtained as described above with respect to the warping, degree of modulation and reflectivity of the disk, in respective separated areas of the inner circumference area (24 mm in radius), the intermediate area (40 mm in radius), and the outer circumference area (55 mm in radius). Table 1 shows the results of the measurements, and the following evaluation methods were utilized.

### [Warping of the disk]

The amount of warping of the finished optical recording medium was measured by using a DLD4000 made by Japan EM.

### [Degree of Modulation]

Recording processes were carried out under the same recording strategy by using DDU1000 manufactured by Pulstec Industrial Co., Ltd. to measure the 14T degree of modulation at that time.

### [Reflectivity]

The reflectivity after the recording process was measured by using DDU1000 manufactured by Pulstec Industrial Co., Ltd.

**Table 1**

| | Amount of warping (mm) | | | Degree of modulation | | | Reflectivity (%) | | |
|---|---|---|---|---|---|---|---|---|---|
| | 24 mm | 40 mm | 55 mm | 24 mm | 40 mm | 55 mm | 24 mm | 40 mm | 55 mm |
| Example 1 | 0 | 51 | 88 | 0.60 | 0.62 | 0.61 | 46 | 47 | 48 |
| Comparative Example 1 | 0 | 123 | 195 | 0.55 | 0.60 | 0.61 | 42 | 46 | 47 |

Table 1 shows that the optical recording medium of the example has a smaller warp in the disk than the optical recording medium of the comparative example, and that the reflectivity and the degree of modulation become higher in particular in the inner circumference area, while the difference in characteristics becomes smaller in the inner circumference, intermediate and outer circumference areas.

### Example 2

By using an injection molding machine (made by Sumitomo Heavy Industries, Ltd.), a transparent disc-shaped substrate with a spiral groove (groove depth: 138 nm, groove width: 300 nm, track pitch: 740 nm), which had an outer diameter of 120 mm, an inner diameter of 15 mm and a thickness of 0.6 mm, was manufactured from polycarbonate resin.

A mixture of dye A and dye B represented by the above-mentioned structural formulae (dye A: 80 mass%, dye B: 20 mass%) was dissolved in 100 ml of 2,2,3,3-tetrafluoropropanol to prepare a dye coating solution.

The dye coating solution thus prepared was then applied onto the surface of a substrate on which grooves had been formed by a spin coating method at a temperature of 25° C and a relative humidity of 45% RH, thereby preparing a recording layer (land portion: 70 nm, groove portion: 120 nm).

After the recording layer had been formed thereon, the substrate was subjected to an annealing process for 2 hours in a clean oven at 60°C. The substrate was supported by vertical stack poles with a gap being maintained by spacers.

After the annealing process, silver was sputtered on the recording layer in an argon atmosphere by using a DC sputtering device (Cube made by Unaxis Balzers AG) to form a reflective layer having a thickness of 75 nm.

Here, the formation area of the reflective layer is on the recording layer, and more specifically set in an area ranging from the inner circumference of 35 mm to the outer circumference of 118.5 mm.

Moreover, with respect to the sputtering conditions, the sputtering power was set to 1 kW and the sputtering pressure was set to 5 x 10⁻² hPa. The sputtering time was set to a period of time required for the reflective layer to reach the above-mentioned thickness.

An adhesive (SK7000 made by Sony Chemicals Corporation) was applied to the reflective layer and the dummy substrate (having virtually the same dimensions and made from the same material as the above-mentioned substrate) by a screen printing method, and after these had been irradiated with ultraviolet rays, the dummy substrate was bonded onto the reflective layer.

The formation area of the bonding layer made of the adhesive was set in an area ranging from the inner diameter of 23 mm (the inner edge of the bonding layer being set to 11.5 mm from the center of the hole) to the outer diameter of 119 mm.

A R23 Clear (made by Jujo Chemical Co., Ltd.) was printed on the dummy substrate through a screen printing method, and this was irradiated with ultraviolet rays to form a print layer; thus, an optical recording medium was manufactured.

Here, the formation area of the print layer was set in an area ranging from the inner diameter of 23 mm (the inner edge of the print layer being set to 11.5 mm from the center of the hole) to the outer diameter of 118 mm.

With respect to the optical recording medium thus manufactured, the state of warping (radial tilt value) in the optical recording medium as a whole was measured by using a DLD4000 (made by Japan EM Co., Ltd.), and Table 2 shows the results of the test.

### Examples 3 and 4, Comparative Examples 2 to 4

Optical recording media were manufactured in the same manner as example 2 except that the inner diameter (corresponding to twice the distance from the center of the hole to the inner edge) in the formation areas of the bonding layer and print layer was set as shown in the following Table 2.

With respect to the respective optical recording media thus manufactured, the same processes as those of example 2 were carried out to measure the state of warping in the optical recording medium as a whole. Table 2 shows the results of the measurements.

**Table 2**

| | Example 2 | Example 3 | Example 4 | Example 5 | Comp. Example 2 | Comp. Example 3 | Comp. Example 4 |
|---|---|---|---|---|---|---|---|
| Bonding layer Inner Diameter (mm) | 23 | 16 | 16 | 23 | 40 | 23 | 40 |
| Print layer Inner Diameter (mm) | 23 | 16 | 23 | 16 | 23 | 38 | 38 |
| Radial Tilt Value (°) | 053 | 052 | 057 | 054 | 0.92 | 0.82 | 0.85 |

Table 2 shows that any one of the optical recording media of examples 2 to 5 had a warp (radial tilt value) of not more than 0.60°, raising no problems in the practical use.

In particular, in examples 2, 3 and 5 in which the inner edges of the print layer and the bonding layer are uniform and the inner edge of the print layer was formed to the side closer to the center hole from the inner edge of the bonding layer, since the bonding layer is covered with the corresponding print layer, the adhesive becomes invisible from outside, making it possible to provide a superior external appearance.

## Claims

1. A disc-shaped optical recording medium (10) comprising at least one sputter layer (16) formed by a sputtering method and also comprising a stack ring (22) **characterized in that** a radially inner circumferential edge of the sputter layer (16) is located radially inside of said stack ring (22).

2. The optical recording medium of claim 1, wherein the radially inner circumferential edge of the sputter layer (16) has a diameter of 15 to 44 mm.

3. The optical recording medium of claim 1, wherein the radially inner circumferential edge of the sputter layer (16) has a diameter of 16 to 36 mm.

4. The optical recording medium of claim 1, wherein the stack ring (22) has a diameter of 33 to 44 mm.

5. The optical recording medium of claim 1 further comprising a substrate (12), a recording layer (14), a reflective layer (16) and a protective layer (18) stacked in this order.

6. The optical recording medium of claim 5, wherein the sputter layer is the reflective layer.

7. The optical recording medium of claim 5, wherein a light-transmitting layer is further provided between the reflective layer (16) and the recording layer (14).

8. The optical recording medium of claim 5, wherein the recording layer (14) contains a dye.

9. The optical recording medium of claim 5, wherein the recording layer (14) is a phase-change recording layer.

10. The optical recording medium of claim 9, wherein the sputter layer is the recording layer.

11. An optical recording medium as claimed in claim 1, comprising:
a pair of disc-shaped substrates, each having a hole (102) in the center portion thereof, that are bonded to each other through a bonding layer (101) made from an adhesive with a print layer (103) being formed on a single side, wherein radially inner edges (101a, 103a) of the bonding layer (101) and the print layer (103) are located within a range from 18 mm from the center (102a) of the hole (102).

12. The optical recording medium of claim 11, wherein each of the radially inner edges (101a, 103a) of the bonding layer (101) and print layer (103) are located within a range from 15 mm from the center (102a) of the hole (102).

13. The optical recording medium of claim 11, wherein each of the radially inner edges (101a, 103a) of the bonding layer (101) and print layer (103) is located within a range from 13 mm from the center (102a) of the hole (102).

14. The optical recording medium of claim 11, wherein the absolute value of a difference between the length from the center (102a) of the hole (102) to the radially inner edge (101a) of the bonding layer (101) and the length from the center (102a) of the hole (102) to the radially inner edge (103a) of the print layer (103) is set to not more than 6 mm.

15. The optical recording medium of claim 11, wherein the absolute value of a difference between the length from the center (102a) of the hole (102) to the radially inner edge (101a) of the bonding layer (101) and the length from the center (102a) of the hole (102) to the radially inner edge (103a) of the print layer (103) is set to not more than 4 mm.

16. The optical recording medium of claim 11, wherein the absolute value of a difference between the length from the center (102a) of the hole (102) to the radially inner edge (101a) of the bonding layer (101) and the length from the center (102a) of the hole (102) to the radially inner edge (103a) of the print layer (103) is set to not more than 2 mm.

17. The optical recording medium of claim 11, wherein the radially inner edge (103a) of the print layer (103) is located on the side closer to the center (102a) of the hole (102) from the radially inner edge (101 a) of the bonding layer (101).

18. The optical recording medium of claim 11, wherein a recording layer containing a dye and a reflective layer are stacked on one of the substrates in this order.

19. The optical recording medium of claim 11, wherein a recording layer containing a dye and a reflective layer are stacked on each of the two substrates in this order.

20. The optical recording medium of claim 19, wherein a protective layer is further formed on the reflective layer.

## Patentansprüche

1. Scheibenförmiges optisches Aufzeichnungsmedium (10) mit wenigstens einer Sprühschicht (16), die durch ein Sprühverfahren ausgebildet wird, und mit wenigstens einem Stapelring (22), **dadurch gekennzeichnet, dass** eine radial innere Umfangskante der Sprühschicht (16) radial innerhalb des Stapelrings (22) angeordnet ist.

2. Optisches Aufzeichnungsmedium nach Anspruch 1, wobei die radial innere Umfangskante der Sprühschicht (16) einen Durchmesser zwischen 15 und 44 mm aufweist.

3. Optisches Aufzeichnungsmedium nach Anspruch 1, wobei die radial innere Umfangskante der Sprühschicht (16) einen Durchmesser zwischen 16 und 36 mm aufweist.

4. Optisches Aufzeichnungsmedium nach Anspruch 1, wobei der Stapelring (22) einen Durchmesser zwischen 33 und 44 mm aufweist.

5. Optisches Aufzeichnungsmedium nach Anspruch 1, das weiterhin ein Substrat (12), eine Aufzeichnungsschicht (14), eine Reflexionsschicht (16) und eine Schutzschicht (18) umfasst, die in dieser Reihenfolge gestapelt sind.

6. Optisches Aufzeichnungsmedium nach Anspruch 5, wobei die Sprühschicht die Reflexionsschicht ist.

7. Optisches Aufzeichnungsmedium nach Anspruch 5, wobei weiterhin eine für Licht durchlässige Schicht zwischen der Reflexionsschicht (16) und der Aufzeichnungsschicht (14) vorgesehen ist.

8. Optisches Aufzeichnungsmedium nach Anspruch 5, wobei die Aufzeichnungsschicht (14) einen Farbstoff enthält.

9. Optisches Aufzeichnungsmedium nach Anspruch 5, wobei die Aufzeichnungsschicht (14) eine Phasenänderungs-Aufzeichnungsschicht ist.

10. Optisches Aufzeichnungsmedium nach Anspruch 9, wobei die Sprühschicht die Aufzeichnungsschicht ist.

11. Optisches Aufzeichnungsmedium nach Anspruch 1, das umfasst.
ein Paar von scheibenförmigen Substraten, die jeweils ein Loch (102) in dem zentralen Teil aufweisen und miteinander über eine Bonding-Schicht (101) aus einem Kleber verbunden sind, wobei eine Druckschicht (103) auf einer Seite ausgebildet ist und wobei die radial inneren Kanten (101a, 103) der Bonding-Schicht (101) und der Druckschicht (103) innerhalb eines Bereichs von 18 mm zu dem Zentrum (102a) des Lochs (102) angeordnet sind.

12. Optisches Aufzeichnungsmedium nach Anspruch 11, wobei die radial inneren Kanten (101a, 103a) der Bonding-Schicht (101) und der Druckschicht (103) jeweils innerhalb eines Bereichs von 15 mm von dem Zentrum (102a) des Lochs (102) angeordnet sind.

13. Optisches Aufzeichnungsmedium nach Anspruch 11, wobei die radial inneren Kanten (101a, 103a) der Bonding-Schicht (101) und der Druckschicht (103) jeweils innerhalb eines Bereichs von 13 mm von dem Zentrum (102a) des Lochs (102) angeordnet sind.

14. Optisches Aufzeichnungsmedium nach Anspruch 11, wobei der absolute Wert einer Differenz zwischen der Länge von dem Zentrum (102a) des Lochs (102) zu der radial inneren Kante (101a) der Bonding-Schicht (101) und der Länge von dem Zentrum (102a) des Lochs (102) zu der radial inneren Kante (103a) der Druckschicht (103) nicht größer als 6 mm ist.

15. Optisches Aufzeichnungsmedium nach Anspruch 11, wobei der absolute Wert einer Differenz zwischen der Länge von dem Zentrum (102a) des Lochs (102) zu der radial inneren Kante (101a) der Bonding-Schicht (101) und der Länge von dem Zentrum (102a) des Lochs (102) zu der radial inneren Kante (103a) der Druckschicht (103) nicht größer als 4 mm ist.

16. Optisches Aufzeichnungsmedium nach Anspruch 11, wobei der absolute Wert einer Differenz zwischen der Länge von dem Zentrum (102a) des Lochs (102) zu der radial inneren Kante (101a) der Bonding-Schicht (101) und der Länge von dem Zentrum (102a) des Lochs (102) zu der radial inneren Kante (103a) der Druckschicht (103) nicht größer als 2 mm ist.

17. Optisches Aufzeichnungsmedium nach Anspruch 11, wobei die radial innere Kante (103a) der Druckschicht (103) auf der Seite angeordnet ist, die dem Zentrum (102a) des Lochs (102) von der radial inneren Kante (101a) der Bonding-Schicht (101) näher ist.

18. Optisches Aufzeichnungsmedium nach Anspruch 11, wobei eine Aufzeichnungsschicht einschließlich eines Farbstoffs und eine Reflexionsschicht auf einem der Substrate in dieser Reihenfolge gestapelt sind.

19. Optisches Aufzeichnungsmedium nach Anspruch 11, wobei eine Aufzeichnungsschicht einschließlich eines Farbstoffs und eine Reflexionsschicht auf jedem der zwei Substrate in dieser Reihenfolge gestapelt sind.

20. Optisches Aufzeichnungsmedium nach Anspruch 19, wobei weiterhin eine Schutzschicht auf der Reflexionsschicht ausgebildet ist.

## Revendications

1. Support d'enregistrement optique en forme de disque (10) comprenant au moins une couche de pulvérisation (16), formé par un procédé de pulvérisation cathodique et comprenant également un anneau d'empilement (22) **caractérisé en ce qu'**un bord circonférentiel radialement interne de la couche de pulvérisation (16) est situé radialement à l'intérieur dudit anneau d'empilement (22).

2. Support d'enregistrement optique selon la revendication 1, dans lequel le bord circonférentiel radialement interne de la couche de pulvérisation (16) a un diamètre de 15 à 44 mm.

3. Support d'enregistrement optique selon la revendication 1, dans lequel le bord circonférentiel radialement interne de la couche de pulvérisation (16) a un diamètre de 16 à 36 mm.

4. Support d'enregistrement optique selon la revendication 1, dans lequel l'anneau d'empilement (22) a un diamètre de 33 à 44 mm.

5. Support d'enregistrement optique selon la revendication 1, comprenant en outre un substrat (12), une couche d'enregistrement (14), une couche réfléchissante (16) et une couche protectrice (18), empilés dans cet ordre.

6. Support d'enregistrement optique selon la revendication 5, dans lequel la couche de pulvérisation est la couche réfléchissante.

7. Support d'enregistrement optique selon la revendication 5, dans lequel une couche de transmission de lumière est en outre disposée entre la couche réfléchissante (16) et la couche d'enregistrement (14).

8. Support d'enregistrement optique selon la revendication 5, dans lequel la couche d'enregistrement (14) contient une teinte.

9. Support d'enregistrement optique selon la revendication 5, dans lequel la couche d'enregistrement (14) est une couche d'enregistrement à changement de phase.

10. Support d'enregistrement optique selon la revendication 9, dans lequel la couche de pulvérisation est la couche d'enregistrement.

11. Support d'enregistrement optique selon la revendication 1, comprenant :
une paire de substrats en forme de disque, chacun comportant un trou (102) dans sa portion centrale, qui sont liés l'un à l'autre par une couche de liaison (101) constituée d'un adhésif, une couche d'impression (103) étant formée sur un côté unique, dans lequel des bords radialement internes (101a, 103a) de la couche de liaison (101) et de la couche d'impression (103) sont situés dans une gamme à partir de 18 mm du centre (102a) du trou (102).

12. Support d'enregistrement optique selon la revendication 11, dans lequel chacun des bords radialement internes (101a, 103a) de la couche de liaison (101) et de la couche d'impression (103) est situé dans une gamme à partir de 15 mm du centre (102a) du trou (102).

13. Support d'enregistrement optique selon la revendication 11, dans lequel chacun des bords radialement internes (101a, 103a) de la couche de liaison (101) et de la couche d'impression (103) est situé dans une gamme à partir de 13 mm du centre (102a) du trou (102).

14. Support d'enregistrement optique selon la revendication 11, dans lequel la valeur absolue d'une différence entre la longueur entre le centre (102a) du trou (102) et le bord radialement interne (101a) de la couche de liaison (101) et la longueur entre le centre (102a) du trou (102) et le bord radialement interne (103a) de la couche d'impression (103) est établie à pas plus de 6 mm.

15. Support d'enregistrement optique selon la revendication 11, dans lequel la valeur absolue d'une différence entre la longueur entre le centre (102a) du trou (102) et le bord radialement interne (101a) de la couche de liaison (101) et la longueur entre le centre (102a) du trou (102) et le bord radialement interne (103a) de la couche d'impression (103) est établie à pas plus de 4 mm.

16. Support d'enregistrement optique selon la revendication 11, dans lequel la valeur absolue d'une différence entre la longueur entre le centre (102a) du trou (102) et le bord radialement interne (101a) de la couche de liaison (101) et la longueur entre le centre (102a) du trou (102) et le bord radialement interne (103a) de la couche d'impression (103) est établie à pas plus de 2 mm.

17. Support d'enregistrement optique selon la revendication 11, dans lequel le bord radialement interne (103a) de la couche d'impression (103) est situé sur le côté plus près du centre (102a) du trou (102) du bord radialement interne (101a) de la couche de liaison (101).

18. Support d'enregistrement optique selon la revendication 11, dans lequel une couche d'enregistrement contenant une teinte et une couche réfléchissante, sont empilées sur l'un des substrats dans cet ordre.

19. Support d'enregistrement optique selon la revendication 11, dans lequel une couche d'enregistrement contenant une teinte et une couche réfléchissante, sont empilées sur chacun des deux substrats dans cet ordre.

20. Support d'enregistrement optique selon la revendication 19, dans lequel une couche protectrice est en outre formée sur la couche réfléchissante.
